# EUROPÄISCHE PATENTSCHRIFT

(11) **EP 0 560 012 B1**
(45) Veröffentlichungstag und Bekanntmachung des Hinweises auf die Patenterteilung: **26.03.1997**
(21) Anmeldenummer: 93100238.0
(22) Anmeldetag: 09.01.1993
(51) Int. Cl.: B01D 46/12, B01D 46/42

(54) **Kassettenfilter**
Cassette filter
Cassette filtrante

(30) Priorität: 13.02.1992 DE 9201823 U
(43) Veröffentlichungstag der Anmeldung: 15.09.1993
(73) Patentinhaber: EMW-BETRIEBE EMMERLING & WEYL GmbH & CO. SCHAUMSTOFF KG, D-65582 Diez (DE)
(72) Erfinder: Drache, Frank, W-6252 Diez (DE)
(74) Vertreter: Blumbach, Kramer & Partner

(56) Entgegenhaltungen:
- DE-A- 2 531 708
- DE-A- 3 341 486
- FR-A- 2 409 667
- US-A- 4 364 751
- US-A- 4 498 915

## Beschreibung

Die Erfindung betrifft ein Filter für gasförmige Medien nach dem Oberbegriff des Anspruchs 1.

Filter dieser Art werden seit längerem zum Filtrieren gasförmiger Medien, insbesondere Luft, auf vielen Gebieten eingesetzt, beispielsweise in Industrieanlagen, Krankenhäusern und ganz allgemein der Klima- und Abgastechnik. Die Filterkassetten besitzen dabei auf der Einströmseite, also am Eingang der taschenförmig angeordneten Filterplatten, einen Abdeckrahmen aus Blech, der mit angepaßten, in die Taschen führenden Öffnungen versehen ist und das tragende Gerüst des Filters bildet. Die Filterplatten sind mit Hilfe von Trageblechen auf der Ober- und Unterseite dauerhaft am Rahmen festgelegt. Das Kassettenfilter als Einheit wird in ein passendes Gehäuse eingeschoben, das gleichzeitig die Zu- und Abluftkanäle bildet. Dichtungen vermeiden eine Umgehung des Filters.

Je nach dem Verschmutzungsgrad der zu filternden Gase müssen die Filterkassetten in regelmäßigen, kürzeren oder längeren Zeitabständen ausgetauscht werden. Dabei ist dann die ganze Filterkassette durch eine neue Kassette zu ersetzen und die alte Kassette zu entsorgen. Bei den üblichen Abmessungen, beispielsweise den Standardabmessungen von 610 x 610 x 305 mm nehmen die Filterkassetten beim Transport und insbesondere auch bei der Lagerhaltung verhältnismäßig viel Platz in Anspruch. Da solche Filterkassetten außerdem bei gleichen Abmessungen mit jeweils unterschiedlichen Wirkungsgraden in Vorrat gehalten werden müssen, ergibt sich ein hoher Aufwand. Entsprechendes gilt für die Entsorgung der Filter, insbesondere dann, wenn die ausgefilterten Gasbestandteile nicht in die Umgebung gelangen dürfen.

Der Erfindung liegt die Aufgabe zugrunde, ein Kassettenfilter zu schaffen, das eine wesentliche Verringerung des Transport- und Lagerhaltungsvolumens sowie einen schnellen, bequemen und kostengünstigen Austausch verbrauchter Filter ermöglicht.

Die Lösung ist im Anspruch 1 gekennzeichnet.

Statt eines Austausches der Filterkassetten ist es bei einem Filter nach der Erfindung nur erforderlich, die Filterplatten selbst auszuwechseln. Das geschieht durch einfaches Lösen der Deckel und Herausziehen der Platten aus den Einschubnuten. Die verbrauchten Filterplatten können platzsparend gestapelt und gegebenenfalls in dichten Behältern entsorgt werden. Die in Vorrat gehaltenen neuen Filterplatten nehmen als Stapel ebenfalls nur wenig Raum ein. Sie sind daher auch einfach zu verpacken und zu transportieren. Insgesamt lassen sich gegenüber einer Ersatzbestückung durch Austausch der vollständigen Kassette Kosteneinsparungen von mehr als 50 % erzielen, wenn entsprechend der vorliegenden Erfindung lediglich die Filterplatten selbst auszutauschen sind.

Ein in der Praxis wichtiger Vorteil ergibt sich auch noch dadurch, daß die Filterkassetten leicht mit unterschiedlichen Filterplatten, beispielsweise mit unterschiedlichem Wirkungsgrad, bestückt werden können. Wenn daher in einem praktischen Anforderungsfall die Ansprüche an die Luftreinheit steigen, können - zunächst auch versuchsweise - andere Filterplatten eingeschoben werden, ohne daß dazu anders bestückte Filterkassetten vorhanden sein müssen. Schließlich ist auch die Herstellung einfacher, denn die Gehäuse und die tragenden Teile des Kassettenfilters für die Filterplatten, also der Rahmen mit den Abdeckplatten, können getrennt von den empfindlichen Filterplatten hergestellt werden.

Weiterbildungen der Erfindung sind Gegenstand der Unteransprüche. So können die Abdeckplatten für alle Filterplatten gemeinsam jeweils einstückig ausgebildet sein. Sie werden zweckmäßig aus Kunststoff gespritzt oder tiefgezogen. Die Abdeckplatten und der Rahmen können ebenfalls einstückig ausgebildet sein, beispielsweise verschweißt werden. Der Deckel ist zweckmäßig ein Tiefziehteil aus Kunststoff. Die leicht lösbare Verbindung zwischen dem Deckel und den Abdeckplatten kann zweckmäßig durch einen Bajonettverschluß, einen Klippverschluß oder auch eine Sicherungskappe verwirklicht werden.

Die Filterplatten besitzen mit Vorteil zur Verbesserung ihrer Steifigkeit sowie auch zur Vereinfachung der Handhabung und zur besseren Abdichtung einen umlaufenden Rahmen, der an die Einschubnuten der Abdeckplatten angepaßt ist. Der Rahmen besteht wiederum zweckmäßig aus einem einstückigen Kunststoffprofil, das gespritzt oder tiefgezogen sein kann. Die Dichtung zwischen dem Rahmen und der Filterplatte kann beispielsweise mittels eines Weichkunststoffes oder einer Vergußmasse erfolgen.

Die Filterplatten können in bekannter Weise aus allen üblichen Filtermaterialien hergestellt werden. Insbesondere können Kleinfaltenfilter (Minipleat-Filter) aus Zellulose, Mikroglasfasern oder auch Mischfasern verwendet werden. In gleicher Weise lassen sich Filterplatten aus Schaumstoff, Kunstfasern, Glasfasern, Mischfasern oder auch Aktivkohle einsetzen.

Der Filterwirkungsgrad oder das Rückhaltevermögen kann je nach Wunsch durch Wahl des Materials und der Porengröße, beispielsweise in einem Bereich von 65 bis 99,9 % (sogenannte Absolutfilter), gewählt werden. Auch alle üblichen Filtergrößen, sowohl mit Standardabmessungen als auch mit Sonderabmessungen, können verwirklicht werden.

Nachfolgend wird die Erfindung anhand der Zeichnung eines Ausführungsbeispiels beschrieben. Es zeigen:
- Fig. 1: eine Vorderansicht eines Kassettenfilters nach der Erfindung,
- Fig. 2: eine Seitenansicht des Filters nach Fig. 1,
- Fig. 3: eine Aufsicht des Filters nach Fig. 1,
- Fig. 4: eine vergrößerte Teilschnittansicht entsprechend der Schnittlinie IV-IV in Fig. 3.

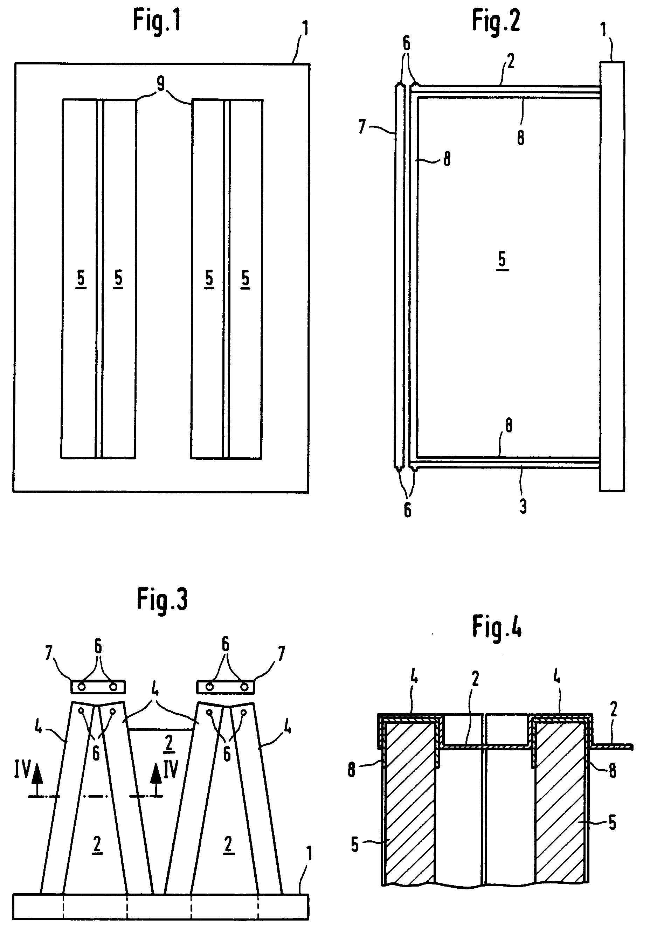

Das dargestellte Kassettenfilter besitzt auf der Anströmseite des Filters einen Rahmen 1, der durch Tiefziehen aus Kunststoff hergestellt ist. An der Rückseite sind eine obere und eine untere Abdeckplatte 2, 3 am Rahmen befestigt, beispielsweise durch Schweißen. Die Abdeckrahmen 2, 3, die ebenfalls Kunststoff-Tiefziehteile sind, besitzen keilförmig aufeinander zulaufende, von der Frontplatte wegführende Einschubnuten 4, die in Fig. 4 im Querschnitt dargestellt sind.

In die Nuten 4 sind Filterplatten 5 eingeschoben und im Anstoßbereich an den Rahmen 1 auf nicht dargestellte Weise abgedichtet. Am hinteren Ende wird ein ebenfalls aus Kunststoff gezogener Deckel über die beiden Hinterkanten der keilförmig zusammenlaufenden Filterplatten 5 abdichtend aufgesetzt, wobei ein leicht lösbarer Schnellverschluß mit Hilfe von Sicherungskappen (nicht gezeigt) verwirklicht wird, die auf Raststifte 6 auf den Abdeckplatten 2, 3 bzw. auf der Ober- und Unterseite des Deckels 7 angeordnet sind.

Die Filterplatten 5 besitzen einen umlaufenden Rahmen 8, der ihre Steifigkeit und Handhabbarkeit verbessert.

Das Kassettenfilter ist im Betrieb in ein Gehäuse (nicht gezeigt) eingesetzt. Das zu reinigende Gas strömt durch Öffnungen 9 im Rahmen 1 in die durch die keilförmig zusammenlaufenden Filterplatten 5 gebildeten Taschen und von dort durch die Filterplatten 5 in den Abluftkanal des Gehäuses. Wenn die Filterplatten verbraucht sind, lassen sie sich leicht nach Öffnen des Deckels 7 aus den Nuten 4 herausziehen und durch neue Platten ersetzen. Ein Austausch der Filterkassette selbst ist nicht erforderlich.

## Patentansprüche

1. Filter für gasförmige Medien mit einer Anzahl von Filterplatten (5), die paarweise jeweils keilförmig zusammenlaufend Taschen bilden und zu einer Filterkassette mit einem angepaßte Öffnungen (9) für die Taschenöffnungen aufweisenden Rahmen (1) zusammengefaßt sind,
dadurch gekennzeichnet,
daß die Filterplatten (5) auf den keilförmig zusammenlaufenden Seiten je eine Abdeckplatte (2, 3) besitzen, die Einschubnuten (4) für die Filterplatten (5) aufweist,
daß Abdeckplatten (2, 3) mit dem Rahmen (1) fest verbunden sind und
daß auf der dem Rahmen (1) abgewandten Seite die Endkanten der beiden Filterplatten (5) jedes Paares durch einen leicht lösbaren, mit den Abdeckplatten (2, 3) verbundenen Deckel (7) abgeschlossen sind.

2. Filter nach Anspruch 1,
dadurch gekennzeichnet, daß die Abdeckplatten (2, 3) aller Filterplatten (5) jeweils einstückig ausgebildet sind.

3. Filter nach Anspruch 2,
dadruch gekennzeichnet, daß die Abdeckplatten (2, 3) und der Rahmen (1) einstückig ausgebildet sind.

4. Filter nach Anspruch 1, 2 oder 3,
dadurch gekennzeichnet, daß der Rahmen (1) aus Kunststoff besteht.

5. Filter nach einem der Ansprüche 1 bis 4,
dadurch gekennzeichnet, daß der Deckel (7) ein Tiefziehteil aus Kunststoff ist.

6. Filter nach einem der Ansprüche 1 bis 5,
dadurch gekennzeichnet, daß die Filterplatten (5) einen umlaufenden, abgedichteten Filterrahmen (8) besitzen, der an die Einschubnuten (4) der Andeckplatten (2, 3) angepaßt ist.

7. Filter nach Anspruch 6,
dadurch gekennzeichnet, daß der Filterrahmen (8) aus Kunststoff besteht.

8. Filter nach einem der Ansprüche 1 bis 7,
dadurch gekennzeichnet, daß die Filterplatten (5) Kleinfaltenfilter aus Zellulose, Mikroglasfasern oder Mischfasern sind.

9. Filter nach einem der Ansprüche 1 bis 5,
dadurch gekennzeichnet, daß die Filterplatten (5) aus Schaumstoff-, Kunstfaser-, Glasfaser- oder Mischfaserplatten bestehen.

## Claims

1. A filter for gaseous media having a number of filter plates (5) which in pairs form pockets converging wedge-fashion and which are combined to form a filter cassette with a frame (1) having matching openings (9) for the pocket openings, characterised in that the filter plates (5) each have a cover plate (2, 3) on the sides converging wedge-fashion, the cover plates having insertion grooves (4) for the filter plates (5), in that cover plates (2, 3) are connected rigidly to the frame (1) and in that on the side remote from the frame (1) the end edges of the two filter plates (5) of each pair are closed by a readily releasable lid (7) connected to the cover plates (2, 3).

2. A filter according to claim 1, characterised in that the cover plates (2, 3) of all the filter plates (5) are in each case made in one piece.

3. A filter according to claim 2, characterised in that the cover plates (2, 3) and the frame (1) are made in one piece.

4. A filter according to claim 1, 2 or 3, characterised in that the frame (1) consists of plastic.

5. A filter according to any one of claims 1 to 4, characterised in that the lid (7) is a plastic deep-drawn part.

6. A filter according to any one of claims 1 to 5, characterized in that the filter plates (5) have a peripheral sealed filter frame (8) adapted to the insertion grooves (4) of the cover plates (2, 3).

7. A filter according to claim 6, characterised in that the filter frame (8) consists of plastic.

8. A filter according to any one of claims 1 to 7, characterized in that the filter plates (5) are minifold filters of cellulose, microglass fibres or mixed fibres.

9. A filter according to any one of claims 1 to 5, characterized in that the filter plates (5) consist of foam material, synthetic fibre, glass fibre or mixed fibre plates.

## Revendications

1. Filtre pour milieux gazeux comportant un certain nombre de plaques filtrantes (5) qui, par paires, forment des poches convergentes en forme de coin et sont rassemblées en une cassette filtrante avec un cadre (1) présentant des ouvertures (9) adaptées pour les ouvertures des poches, caractérisé en ce que les plaques filtrantes (5) possèdent chacune, sur leurs côtés convergents en forme de coin, une plaque de recouvrement (2, 3) qui présente des rainures d'insertion (4) pour les plaques filtrantes, en ce que les plaques de recouvrement (2, 3) sont fixées sur le cadre (1), et en ce que, sur la face opposée au cadre (1), les arêtes terminales des deux plaques filtrantes (5) de chaque paire sont fermées au moyen d'un couvercle (7) facilement amovible et relié aux plaques de recouvrement (2, 3).

2. Filtre selon la revendication 1, caractérisé en ce que les plaques de recouvrement (2, 3) de toutes les plaques filtrantes (5) sont toutes formées d'une seule pièce.

3. Filtre selon la revendication 2, caractérisé en ce que les plaques de recouvrement (2, 3) et le cadre (1) font corps.

4. Filtre selon la revendication 1, 2 ou 3, caractérisé en ce que le cadre (1) est constitué d'une matière plastique.

5. Filtre selon l'une des revendications 1 à 4, caractérisé en ce que le couvercle (7) est une pièce d'emboutissage profond en matière plastique.

6. Filtre selon l'une des revendications 1 à 4, caractérisé en ce que les plaques filtrantes (5) possèdent un cadre de filtre (8) périphérique étanchéifié qui est adapté aux rainures d'insertion (4) des plaques de recouvrement (2, 3).

7. Filtre selon la revendication 6, caractérisé en ce que le cadre de filtre (8) est constitué d'une matière plastique.

8. Filtre selon l'une des revendications 1 à 7, caractérisé en ce que les plaques filtrantes (5) sont des filtres à petits plis, formés de cellulose, de microfibres de verre ou de fibres mélangées.

9. Filtre selon l'une des revendications 1 à 5, caractérisé en ce que les plaques filtrantes (5) sont formées de plaques de mousse, de plaques de fibres synthétiques, de plaques de fibres de verre ou de plaques de fibres mélangées.
